# EUROPÄISCHE PATENTSCHRIFT

(11) **EP 2 697 036 B1**
(45) Veröffentlichungstag und Bekanntmachung des Hinweises auf die Patenterteilung: **28.08.2019**
(21) Anmeldenummer: 12715920.0
(22) Anmeldetag: 13.04.2012
(51) Int. Cl.: B29C 69/00, B29C 45/00, F02M 35/10, B29C 65/10, B29C 65/14, B29C 39/22, B29C 65/16, B29C 65/08, F02M 35/112

(54) **SAUGMODUL UND ZUGEHÖRIGES HERSTELLUNGSVERFAHREN**
AIR INTAKE AND ASSOCIATED PRODUCTION METHOD
MODULE D'ASPIRATION D'AIR ET SON PROCÉDÉ DE PRODUCTION

(30) Priorität: 14.04.2011 DE 102011007432
(43) Veröffentlichungstag der Anmeldung: 19.02.2014
(73) Patentinhaber: Mahle International GmbH, 70376 Stuttgart (DE); MAHLE Behr GmbH & Co. KG, 70469 Stuttgart (DE)
(72) Erfinder: BRUGGESSER, Veit, 71157 Hildrizhausen (DE); STEHLIG, Jürgen, 72654 Neckartenzlingen (DE); EILEMANN, Andreas, 71729 Erdmannhausen (DE); POMIN, Hubert, 71069 Sindelfingen (DE); SAUMWEBER, Christian, 70378 Stuttgart (DE)
(74) Vertreter: BRP Renaud & Partner mbB Rechtsanwälte Patentanwälte Steuerberater
(86) Internationale Anmeldenummer: PCT/EP2012/056771
(87) Internationale Veröffentlichungsnummer: WO 2012/140196

(56) Entgegenhaltungen:
- WO-A1-03/024566
- DE-A1-102009 025 282
- DE-B3-102009 050 258
- DE-C1- 10 215 458
- JP-A- 2001 026 056
- JP-A- 2007 296 700
- JP-A- 2008 221 530
- US-A- 5 833 785

## Beschreibung

Die vorliegende Erfindung betrifft ein Verfahren zum Herstellen eines Bauteils in Form eines Saugmoduls, das ein Gehäuse und wenigstens einen darin angeordneten Funktionseinsatz in Form eines Ladeluftkühlers aufweist.

Das Interesse, Bauteile mit Einsätzen möglichst preiswert herzustellen, ist insbesondere bei der Serienfertigung und vorzugsweise bei der Fahrzeugherstellung vergleichsweise groß. Bauteile, die ein Gehäuse und einen darin angeordneten Einsatz aufweisen, sind bspw. Schalldämpfer, Filter und Wärmeübertrager. Ohne Beschränkung der Allgemeinheit des der Erfindung zugrunde liegenden Gedankens, bezieht sich die vorliegende Erfindung insbesondere auf einen Ladeluftkühler, dessen Kühlergehäuse einen Frischluftkanalabschnitt bildet, in dem ein Kühlerblock angeordnet ist. Der Kühlerblock enthält in üblicher Weise einen Frischluftpfad, der von der zu kühlenden, aufgeladenen Frischluft durchströmbar ist, und einen Kühlmittelpfad, der von einem die Wärme abführenden Kühlmittel durchströmbar ist. Frischluftpfad und Kühlmittelpfad sind dabei mediengetrennt und wärmeübertragend miteinander gekoppelt.

Ladeluftkühler sind bspw. aus der DE 10 2007 030 464 A1, DE 10 2009 012 024 A1, DE 10 2009 025 282 A1 und DE 10 2009 050 258 B3 bekannt.

Für die Herstellung derartiger Bauteile, insbesondere von derartigen Ladeluftkühlern, ist es üblich, zunächst das Gehäuse herzustellen und dann den Funktionseinsatz einzubringen. Je nach Druckbelastung des Gehäuses gestaltet sich dabei die Abdichtung des Gehäuses im Bereich einer Einführöffnung, durch welche der Funktionseinsatz in das Gehäuse eingesetzt werden kann, vergleichsweise aufwändig.

Die US 5 833 785 A zeigt ein Verfahren zum Herstellen eines Steckers. Die WO 2003/024566 A1 betrifft die Herstellung eines Kraftstofffilters. Die DE 102 15 458 C1 betrifft die Herstellung eines Linearantriebs. Aus der JP 2008 221 530 A ist die Herstellung einer Leuchte bekannt.

Aus der JP 2007 296 700 A und aus der JP 2001 026 056 A ist jeweils ein Verfahren zum Herstellen eines Saugmoduls ohne darin eingesetzten Ladeluftkühler bekannt.

Die vorliegende Erfindung beschäftigt sich mit dem Problem, für ein Saugmodul der Eingangs genannten Art bzw. für ein zugehöriges Herstellungsverfahren eine verbesserte Ausführungsform anzugeben, die sich insbesondere durch einen reduzierten Aufwand bei hinreichender Abdichtung auszeichnet.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, das Gehäuse mehrteilig auszugestalten, die einzelnen Gehäuseteile aus Kunststoff mittels Spritzformtechnik herzustellen und die so hergestellten, separaten Gehäuseteile miteinander zu verschweißen, um das Gehäuse auszubilden. Vor dem Verschweißen der Gehäuseteile wird wenigstens ein Funktionseinsatz, nämlich der Ladeluftkühler in wenigstens eines der Gehäuseteile eingelegt werden, sodass beim Verschweißen der Gehäuseteile, also beim Zusammenfügen des Gehäuses der jeweilige Funktionseinsatz bereits ordnungsgemäß im Gehäuse angeordnet ist. Die Erfindung nutzt hierbei die Erkenntnis, dass das mehrteilige Gehäuse vor dem Fügen der Gehäuseteile offen ist, sodass es ohne weiteres möglich ist, auch größere Funktionseinsätze in das jeweilige Gehäuseteil einzulegen. Durch das Fügen der Gehäuseteile zum Gehäuse, wird das Gehäuse verschlossen und der jeweilige Funktionseinsatz wird dadurch im Gehäuse eingeschlossen. Auf eine separate Einführöffnung zum Einsetzen des Funktionseinsatzes kann somit verzichtet werden, sodass auch die damit einhergehenden Dichtigkeitsprobleme sowie der zugehörige Aufwand entfallen. Der Funktionseinsatz, also der Ladeluftkühler kontaktiert mindestens zwei Gehäuseteile. Durch das Zusammenfügen der Gehäuseteile wird der Funktionseinsatz derart zwischen den Gehäuseteilen gehalten, dass Relativbewegungen zwischen dem Funktionseinsatz und den Gehäuseteilen verhindert werden.

Vorzugsweise verfügt der Funktionseinsatz, also der Ladeluftkühler über einen Vorsprung, welcher teilweise oder vollständig umlaufend um den Funktionseinsatz herum ausgebildet ist. Der Vorsprung wird zumindest bereichsweise von einer Aufnahme, welche vorzugsweise als Nut ausgebildet ist, aufgenommen.

Bei anderen Ausführungen kann der Vorsprung auch an den Gehäuseteilen und die Nut an dem Funktionseinsatz, also dem Ladeluftkühler angeordnet sein. Bei vorteilhaften Ausgestaltungen der Erfindung korrespondiert der Funktionseinsatz an zwei oder mehr axial voneinander beabstandeten Stellen mit dem Gehäuse.

Bei anderen Ausgestaltungen verfügen die Gehäuseteile über einen, insbesondere mehrteiligen, Anschlag für den Funktionseinsatz, also den Ladeluftkühler, welcher die Relativbewegungen des Funktionseinsatzes in dem Gehäuse begrenzt. Dies sind bspw. Stege, welche derart zu einander beabstandet und toleriert sind, dass der Funktionseinsatz spielfrei eingepasst ist.

Durch die erfindungsgemäße Montage des Funktionsbauteiles, also des Ladeluftkühlers in spritzfrische Gehäuseteile sind die Gehäuseteile noch nicht nennenswert verzogen oder geschrumpft. Beim weiteren Abkühlen der Gehäuseteile passen sich diese dem Funktionsbauteil an, wodurch dieses spielfrei in der entsprechenden Aufnahme angeordnet ist.

Zweckmäßig werden die wenigstens zwei Gehäuseteile jeweils in einem Spritzwerkzeugabschnitt spritzgeformt. Dabei ist es grundsätzlich möglich, die beiden Spritzwerkzeugabschnitte in separaten Spritzwerkzeugen auszubilden. Vorteilhaft ist jedoch eine Ausführungsform, bei welcher die wenigstens zwei Spritzwerkzeugabschnitte im selben Spritzwerkzeug ausgebildet sind. Hierdurch wird erreicht, dass die zusammengehörenden Gehäuseteile im Wesentlichen gleichzeitig hergestellt werden, wobei außerdem im Wesentlichen die gleichen Temperaturen und Kunststoffzusammensetzungen vorliegen.

Besonders vorteilhaft ist eine Weiterbildung, bei der die wenigstens zwei Gehäuseteile für den Schweißvorgang in jeweils einem Werkzeugteil der mehrteiligen Spritzwerkzeugabschnitte verbleiben. Mit anderen Worten, zum Verschweißen der Gehäuseteile müssen die Gehäuseteile nicht entformt werden, vielmehr können sie im zugehörigen Werkzeugteil des jeweiligen Spritzwerkzeugabschnitts verbleiben. Zum einen erfolgt somit das Einsetzen des Funktionseinsatzes, also des Ladeluftkühlers und das Verschweißen der Gehäuseteile zeitnah, da die Spritzwerkzeugabschnitte im Rahmen der Serienfertigung möglichst rasch wieder frei sein müssen. Gleichzeitig führt dies zum anderen dazu, dass die Gehäuseteile spritzfrisch weiter verarbeitet werden, sodass sich noch kein störendes Wasser in den Kunststoff einlagern konnte. Insbesondere in den Schweißzonen, in denen die Gehäuseteile miteinander verschweißt werden sollen, können Wassereinlagerungen störend sein und bspw. die Güte der jeweiligen Schweißnaht beeinträchtigen. Entformt wird somit das komplette Gehäuse mit integriertem Funktionseinsatz. Das Verbleiben in den Werkzeugteilen der Spritzwerkzeugabschnitte führt außerdem dazu, dass innerhalb der Werkzeugteile eine exakte Positionierung bzw. Fixierung der Gehäuseteile erfolgt, sodass beim Verschweißen enge Lagetoleranzen eingehalten werden können. Insbesondere kann ein Versatz zwischen den Gehäuseteilen vermieden werden. Des Weiteren werden beim Verschweißen die Gehäuseteile der gleichen Charge und der gleichen Temperatur gefügt, sodass die Gefahr eines Verzugs aufgrund thermischer Effekte reduziert ist.

Besonders vorteilhaft ist eine Weiterbildung, bei welcher die Werkzeugteile der wenigstens zwei Spritzwerkzeugabschnitte zwischen einer geschlossenen Spritzstellung, in welcher die Gehäuseteile spritzgeformt werden, einer offenen Einlegestellung, in welcher der wenigstens eine Funktionseinsatz, also der wenigstens eine Ladeluftkühler in das jeweilige Gehäuseteil eingesetzt wird, einer offenen Heizstellung, in welcher die Gehäuseteile in miteinander zu verschweißenden Schweißzonen erhitzt werden, und einer geschlossenen Schweißstellung verstellbar sind, in welcher die Gehäuseteile in den Schweißzonen zum Gehäuse verschweißt werden. In der Spritzstellung wirkt innerhalb des jeweiligen Spritzwerkzeugabschnitts ein äußeres Werkzeugteil zum Ausbilden einer Außenseite oder Außenkontur des jeweiligen Gehäuseteils mit einem inneren Werkzeugteil zum Ausbilden einer Innenseite oder Innenkontur des jeweiligen Gehäuseteils zusammen. Inneres und äußeres Werkzeugteil bilden in der Spritzstellung eine Kavität, in die der Kunststoff eingespritzt wird, um das jeweilige Gehäuseteil zu formen. Zum Einstellen der Einlegestellung werden die inneren Werkzeugteile entfernt, sodass das spritzgeformte Gehäuseteil im jeweiligen äußeren Werkzeugteil verbleibt. Insoweit sind die spritzgeformten Werkzeugteile an ihrer Innenseite offen und somit zugänglich, um den jeweiligen Funktionseinsatz einlegen zu können. Das Einlegen des jeweiligen Funktionseinsatzes kann manuell, vorzugsweise jedoch mittels einer Einlegeeinrichtung, bspw. in Form eines Roboters, erfolgen. In der Heizstellung kann mit Hilfe einer Heizeinrichtung wenigstens ein Heizelement so positioniert werden, dass die Schweißzonen auf eine gewünschte Schweißtemperatur aufgeheizt werden können. Dabei ist es grundsätzlich möglich, dass die Einlegestellung und die Heizstellung hinsichtlich der Relativlage der Werkzeugteile identisch sein können, sodass die Werkzeugteile nicht bewegt werden müssen, um von der Einlegestellung in die Heizstellung zu gelangen. Zweckmäßig erfolgt jedoch das Aufheizen der Schweißzonen nachdem der jeweilige Funktionseinsatz in das jeweilige Gehäuseteil eingelegt ist. Für bestimmte Anwendungen kann es jedoch zweckmäßig sein, das Aufheizen der Schweißzonen bereits vor dem Einlegen des Funktionseinsatzes durchzuführen, bspw. dann, wenn auch zwischen dem Funktionseinsatz und wenigstens einem der Gehäuseteile eine Schweißverbindung hergestellt werden soll. Denkbar ist hierzu auch ein zweistufiger Heizvorgang. Während einer ersten Heizstufe werden am jeweiligen Werkzeugteil und/oder am jeweiligen Funktionseinsatz Schweißzonen erhitzt, die beim Einsetzen des Funktionseinsatzes in das jeweilige Gehäuseteil eine Schweißverbindung zwischen dem Funktionseinsatz und dem jeweiligen Gehäuseteil erzeugen sollen. In einer zweiten Heizstufe können dann die Schweißzonen der miteinander zu verschweißenden Gehäuseteile aufgeheizt werden. Insbesondere können während der zweiten Heizstufe außerdem Schweißzonen am Funktionseinsatz und an einem Gehäuseteil aufgeheizt werden, die beim Fügen des Gehäuses eine weitere Schweißverbindung zwischen Funktionseinsatz und dem Gehäuseteil erzeugen sollen. In der Schweißstellung wird das Gehäuse geschlossen. Dabei kommen die Gehäuseteile im Bereich ihrer aufgeheizten Schweißzonen aneinander zur Anlage, wobei ein definierter Druck ausgeübt werden kann, um die Qualität der Schweißnähte zu verbessern.

Besonders zweckmäßig ist eine Ausführungsform, bei welcher die Spritzstellung, die Einlegestellung, die Heizstellung und die Schweißstellung im selben Spritzwerkzeug realisiert werden. Alternativ ist es grundsätzlich möglich, die Werkzeugteile mit darin angeordneten Gehäuseteilen nach dem Spritzformen der Gehäuseteile und vor dem Verschweißen der Gehäuseteile von einem Spritzwerkzeug zu einem Schweißwerkzeug zu übergeben. Im Spritzwerkzeug wird dann die Spritzstellung realisiert. Im Schweißwerkzeug werden dann die Heizstellung und die Schweißstellung realisiert. Die Einlegestellung lässt sich sowohl im Spritzwerkzeug als auch im Schweißwerkzeug realisieren. Alternativ kann das Einlegen des Funktionseinsatzes, also des Ladeluftkühlers auch auf dem Transportweg von der Spritzgussmaschine zu der Schweißvorrichtung erfolgen Zweckmäßig erfolgt die Übergabe automatisiert, z.B. mittels eines Roboters.

Zweckmäßig werden die miteinander zu verschweißenden Schweißzonen der Gehäuseteile mit wenigstens einem Heizelement aufgeheizt, um anschließend die Gehäuseteile zum Fügen des Gehäuses miteinander verschweißen zu können. Beim Aufheizen werden somit die Schweißzonen soweit verflüssigt bzw. aufgeweicht, dass durch eine Kontaktierung der Schweißzonen beim Fügen des Gehäuses die gewünschte Schweißverbindung bzw. Fusionsverbindung realisiert werden kann.

Vorteilhaft kann der Schweißvorgang als Heiß-Gas-Schweißen ausgestaltet sein. Beim Heiß-Gas-Schweißen wird das Aufheizen der Schweißzonen mittels eines Heißgases erzielt, welches die Schweißzonen anströmt. Insbesondere kann somit aus dem jeweiligen Heizelement Heißgas austreten und die Schweißzonen beaufschlagen. Alternativ sind jedoch auch andere Schweißverfahren denkbar. Bspw. kann der Schweißvorgang durch Laser- oder Ultraschallschweißen oder als NIR-Schweißen ausgestaltet sein. NIR steht dabei für "Nahes Infrarot". Beim NIR-Schweißen wird ein Infrarotstrahler vergleichsweise nahe an die jeweilige Schweißzone herangeführt, um die gewünschte Aufheizung mittels InfrarotStrahlung zu erzielen. Insbesondere kann somit das jeweilige Heizelement Infrarotstrahlung abstrahlen und damit die Schweißzonen beaufschlagen.

Bei einer anderen Ausführungsform kann beim Verschweißen der Gehäuseteile außerdem wenigstens eines der Gehäuseteile zusätzlich mit dem wenigstens einen Funktionseinsatz, also dem Ladeluftkühler verschweißt werden. Hierdurch kann bspw. eine Fixierung des Funktionseinsatzes am jeweiligen Gehäuseteil realisiert werden.

Besonders vorteilhaft ist es dabei, wenn die Gehäuseteile beim Verschweißen zumindest einen aus dem Gehäuse herausgeführten Bestandteil des Funktionseinsatzes, also des Ladeluftkühlers umschließen und damit verschweißt werden, sodass der jeweilige Bestandteil des Funktionseinsatzes dicht aus dem Gehäuse herausgeführt ist. Bspw. kann ein derartiger Bestandteil eine Anschlussleitung zum Zuführen oder zum Abführen von Fluiden sein, der von dazu komplementär geformten Abschnitten der Gehäuseteile vollständig umgriffen wird. Durch entsprechendes Aufheizen dieser Kontaktbereiche kann auch dort eine ausreichende Schweißverbindung realisiert werden. Zweckmäßig kann jedoch das Aufheizen mit dem Einlegen so kombiniert bzw. abgestimmt werden, dass die mit den Gehäuseteilen zu verschweißenden Zonen des Funktionseinsatzes aufgeheizt werden, um das Ausbilden der Schweißverbindungen zu begünstigen.

Erfindungsgemäß handelt es sich beim Bauteil um ein Saugmodul, also um einen Frischluftverteiler für eine Brennkraftmaschine. Der Funktionseinsatz ist erfindungsgemäß ein Ladeluftkühler. Das Gehäuse weist einen Frischluftkanalabschnitt auf, in den der Ladeluftkühler eingesetzt ist. Insbesondere lassen sich die Gehäuseteile so aneinander ansetzen, dass eine Vorlaufleitung und eine Rücklaufleitung eines Kühlmittelpfads des Ladeluftkühlers aus dem Gehäuse herausgeführt sind. Weiterhin umfasst das Gehäuse auch einen Kanalabschnitt für die Frischluftleitung einer Brennkraftmaschine, in welchen der Ladeluftkühler eingesetzt ist.

Ein Werkzeug zur Durchführung des vorstehend beschriebenen Verfahrens umfasst zumindest eine Spritzformeinrichtung zum Spritzformen der Gehäuseteile, eine Einlegeeinrichtung zum Einlegen des wenigstens einen Funktionseinsatzes, also des Ladeluftkühlers in wenigstens eines der Gehäuseteile und eine Schweißeinrichtung zum Verschweißen der Gehäuseteile miteinander zum Gehäuse bei darin eingelegtem wenigstens einen Ladeluftkühler.

Gemäß einer vorteilhaften Weiterbildung der Erfindung verfügt das Gehäuse über mindestens eine Rippe, welche den Funktionseinsatz, also den Ladeluftkühler formschlüssig kontaktiert und so eine labyrinthartige Abdichtung zwischen dem Gehäuse und dem Funktionseinsatz bildet. Der formschlüssige Kontakt kann durch eine vorgeformte Aussparung an dem Funktionseinsatz gebildet sein. Bei anderen Ausgestaltungen ist die Rippe derart steif ausgebildet, dass sie beim Zusammenfügen der Gehäuseteile und des Funktionsbausatzes eine partielle mechanische Verformung des Funktionseinsatzes erzeugt. Hierbei ist die Rippe derart ausgestaltet, dass sie sich in Montagerichtung der Gehäuseteile zu dem Funktionsbauteil erstreckt. Insbesondere verfügt ein Frischluftverteiler über eine derartige Rippe, wobei die Rippe in Lamellen eines Kühlblockes eingedrückt wird. Die in die Lamellen eingedrückte Rippe dringt nur in die Bereiche ein, in welchen sie auch nach der Endmontage angeordnet ist. Eine Deformierung von Teilbereichen, in welchen die Rippe nach der Endmontage nicht mehr angeordnet ist, unterbleibt, wodurch eine zuverlässige Dichtung erreicht wird.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1 bis 9: jeweils eine stark vereinfachte Prinzipdarstellung eines Werkzeugs bei verschiedenen Stufen eines Verfahrens zum Herstellen eines Bauteils,
- Fig. 10: eine auseinandergezogene Darstellung einer speziellen Ausführungsform des mit Hilfe des Herstellungsverfahrens herstellbaren Bauteils,
- Fig. 11: ein Frischluftverteiler mit einem Ladeluftkühler in teilmontiertem Zustand,
- Fig. 12: einen Teilausschnitt eines Frischluftverteilers mit einem Ladeluftkühler vor der Montage,
- Fig. 13: eine Seitenansicht nach der Montage gemäß Fig. 12 im Schnitt und
- Fig. 14: eine alternative Ausgestaltung der Fig. 13.

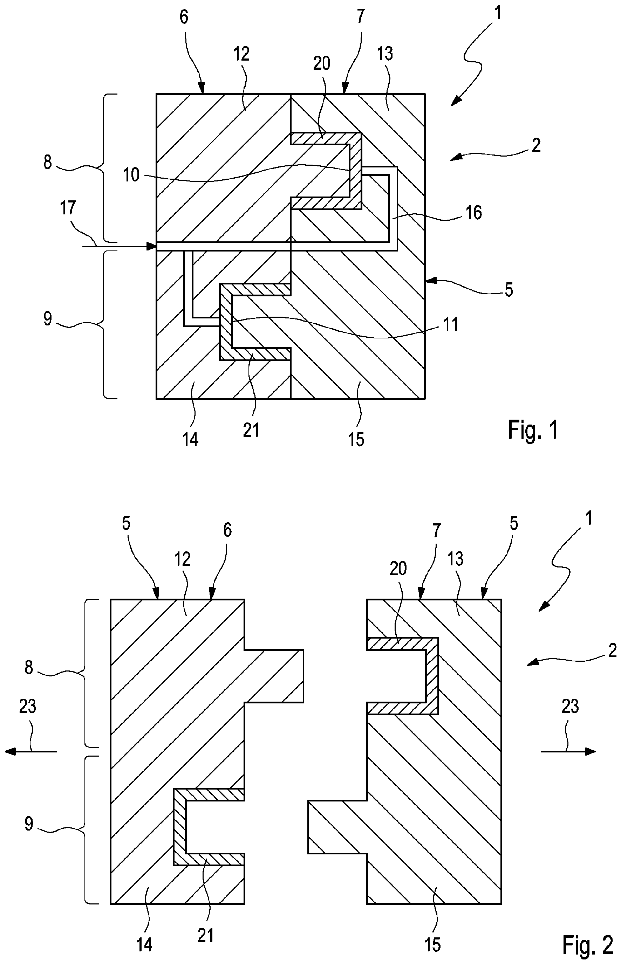

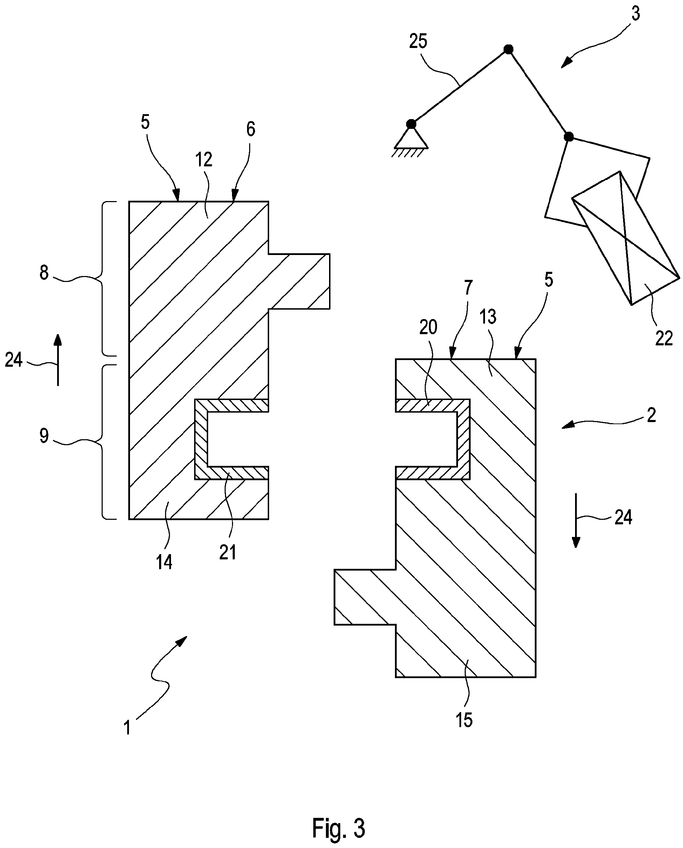

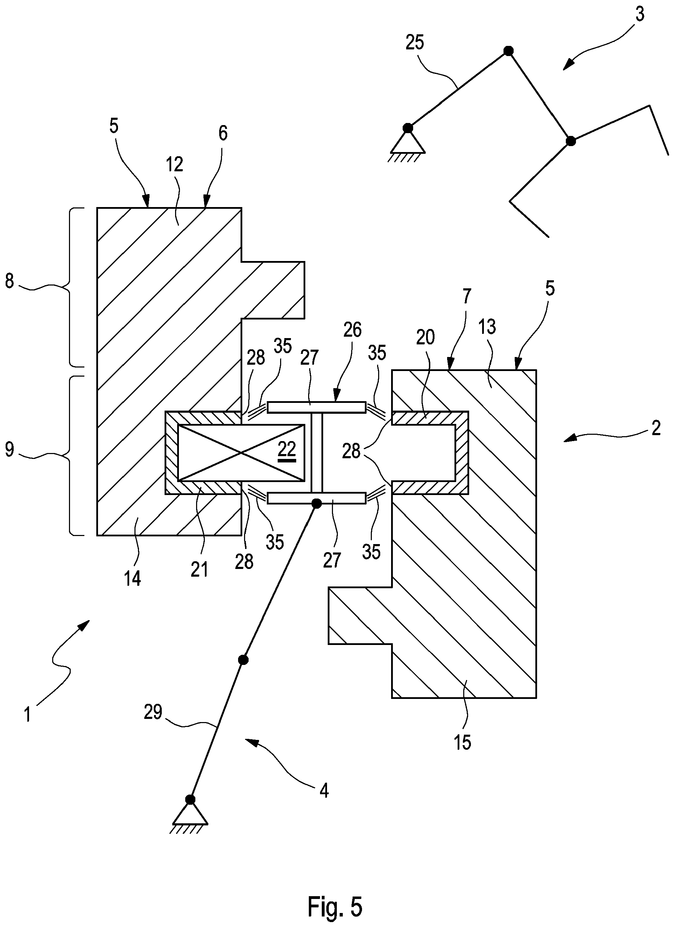

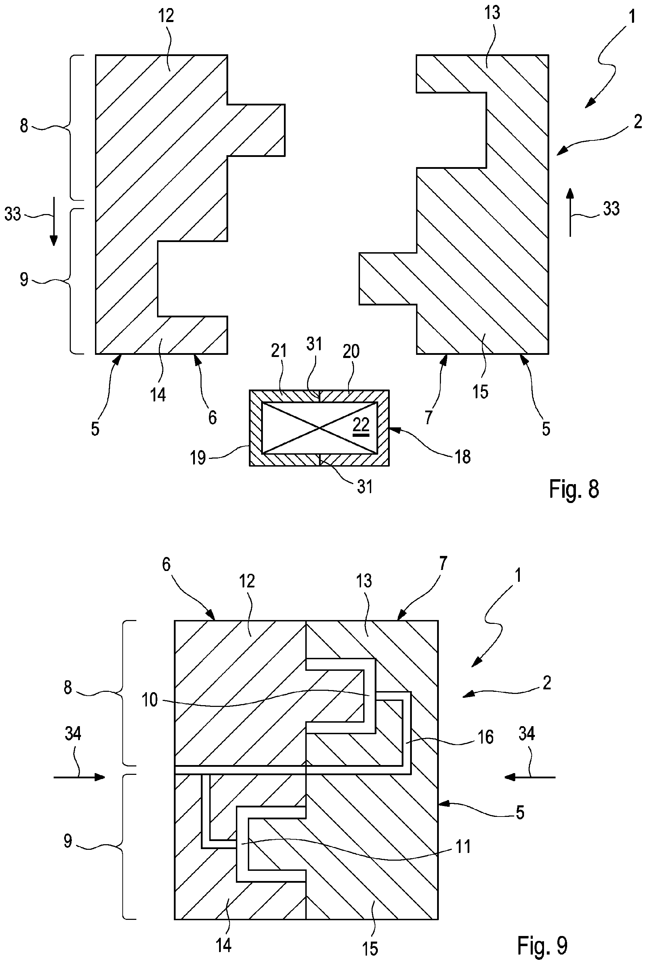

Entsprechend den Figuren 1 bis 9 umfasst eine Vorrichtung 1 eine Spritzformeinrichtung 2, eine in den Figuren 3 bis 5 erkennbare Einlegeeinrichtung 3 und eine in Fig. 5 erkennbare Schweißeinrichtung 4. Die Spritzformeinrichtung 2 umfasst ein Spritzwerkzeug 5, das zwei Formkörper 6,7 aufweist, die relativ zueinander beweglich sind. Das Spritzwerkzeug 5 und die Formkörper 6,7 sind bei der hier gezeigten, bevorzugten Ausführungsform in zwei Spritzwerkzeugabschnitte 8,9 unterteilt, die in den Figuren 1 bis 9 zumindest für den in den Figuren 1 bis 9 links dargestellten ersten Formkörper 6 mit geschweiften Klammern angedeutet sind. Jeder Spritzwerkzeugabschnitt 8,9 ist durch zwei Werkzeugteile gebildet, die zum Ausbilden von Kavitäten 10,11 gemäß den Figuren 1 und 9 ineinander greifen, um eine Außenkontur und eine Innenkontur des jeweiligen, herzustellenden

Werkstücks zu definieren. In dem in den Figuren 1 bis 9 oberen oder ersten Spritzwerkzeugabschnitt 8 sind somit ein inneres Werkzeugteil 12 und ein äußeres Werkzeugteil 13 vorgesehen. Das innere Werkzeugteil 12 befindet sich dabei in dem links dargestellten ersten Formkörper 6, während das äußere Werkzeugteil 13 im rechts dargestellten zweiten Formkörper 7 ausgebildet ist. In dem in den Figuren 1 bis 9 unten dargestellten zweiten Spritzwerkzeugabschnitt 9 befindet sich ein äußeres Werkzeugteil 14 im ersten Formkörper 6, während ein inneres Werkzeugteil 15 am zweiten Formkörper 7 ausgebildet ist.

In die beiden Formkörper 6,7 sind gemäß den Figuren 1 und 9 Spritzkanäle 16 integriert, die zu den Kavitäten 10,11 führen und denen entsprechend einem in Fig. 1 angedeuteten Pfeil 17 Kunststoff zum Spritzen der Werkstücke zugeführt werden kann.

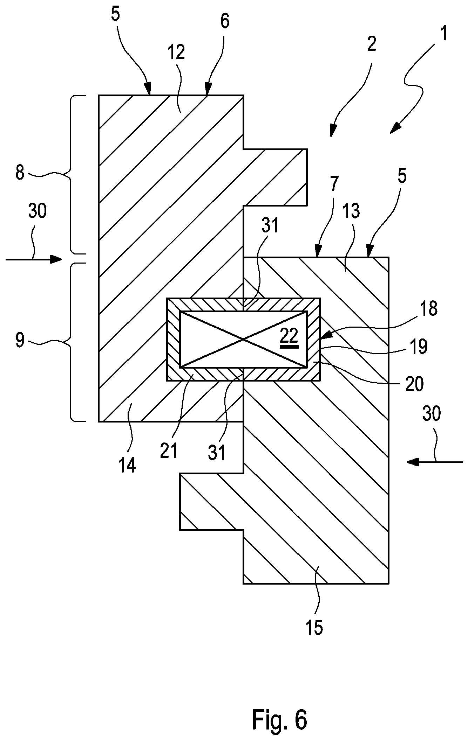

Die Vorrichtung 1 dient zum Herstellen eines in den Figuren 6 bis 8 und 10 erkennbaren Bauteils 18. Das Bauteil 18 weist ein Gehäuse 19 auf, das aus wenigstens zwei Gehäuseteilen 20,21 zusammengebaut ist. Ferner umfasst das Bauteil 18 zumindest einen Funktionseinsatz 22, der im Inneren des Gehäuses 19 angeordnet ist. Die Funktionsweise der Vorrichtung 1 bzw. das mit Hilfe der Vorrichtung 1 ausführbare Herstellungsverfahren wird im Folgenden näher erläutert:
In Fig. 1 befinden sich die Werkzeugteile 12,13,14,15 in einer Spritzstellung, in welcher die inneren Werkzeugteile 12,15 in die zugehörigen äußeren Werkzeugteile 13,14 eingreifen, um die Kavitäten 10,11 zum Herstellen der Gehäuseteile 20,21 zu bilden. Gemäß Fig. 1 kann in dieser Spritzstellung der Kunststoff entsprechend dem Pfeil 17 gespritzt werden, um die beiden Gehäuseteile 20,21 spritz zu formen.

Gemäß Fig. 2 lassen sich die Formkörper 6,7 und somit die Werkzeugteile 12,13,14,15 entsprechend Pfeilen 23 voneinander entfernen, um das Spritzwerkzeug 5 zu öffnen. Die spritzgeformten Gehäuseteile 20,21 verbleiben dabei im jeweiligen äußeren Werkzeugteil 13 bzw. 14.

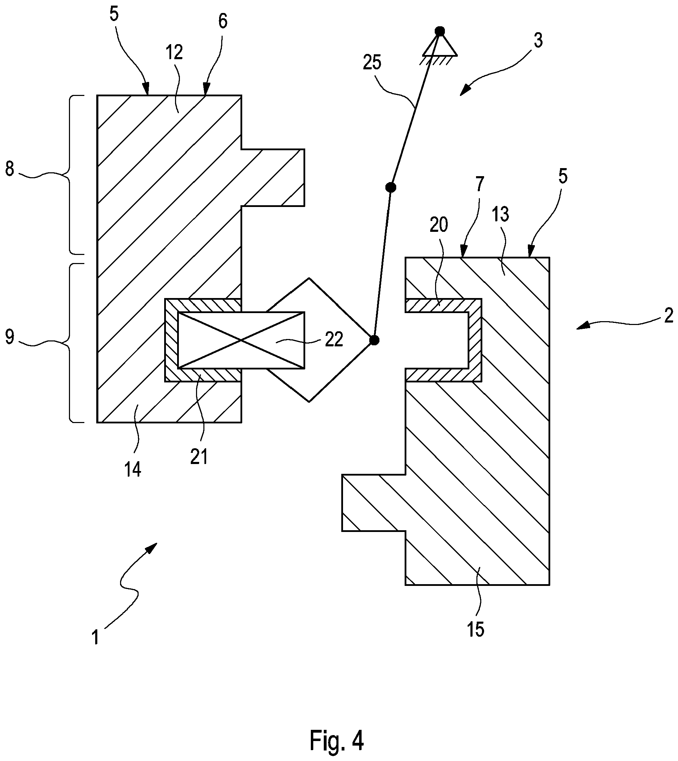

Gemäß Fig. 3 lassen sich die Formkörper 6,7 und somit auch die Werkzeugteile 12,13,14,15 entsprechend Pfeilen 24 relativ zueinander so verstellen, dass nunmehr die äußeren Werkzeugteile 13,14 und somit die darin angeordneten Gehäuseteile 20,21 zueinander fluchtend ausgerichtet sind. Das offene Spritzwerkzeug 5 nimmt jetzt eine Einlegestellung ein. Mit Hilfe der Einlegeeinrichtung 3, die bspw. einen Roboterarm 25 umfasst, kann nun der Funktionseinsatz 22 gemäß Fig. 4 in eines der Gehäuseteile 20,21 eingelegt bzw. eingesetzt werden. Im Beispiel bleibt das rechts dargestellte erste Gehäuseteil 20 frei, während der Funktionseinsatz 22 in das links dargestellte zweite Gehäuseteil 21 eingesetzt wird.

Nach dem Einsetzen des Funktionseinsatzes 22 oder gleichzeitig mit dem Einsetzen des Funktionseinsatzes 22 tritt die Schweißeinrichtung 4 in Aktion. Gemäß Fig. 5 umfasst die Schweißeinrichtung 4 eine Heizeinrichtung 26, die wenigstens ein Heizelement 27 aufweist, mit dessen Hilfe Schweißzonen 28 der Gehäuseteile 20,21 aufgeheizt werden können. Im Bereich dieser Schweißzonen 28 sollen die Gehäuseteile 20,21 miteinander verschweißt werden. Im Beispiel fällt die in Fig. 5 gezeigte Heizstellung des Spritzwerkzeugs 5 mit der Einlegestellung gemäß Fig. 3 zusammen. Zum Positionieren des jeweiligen Heizelements 27 kann die Heizeinrichtung 26 bzw. die Schweißeinrichtung 4 zum Beispiel einen weiteren Roboterarm 29 aufweisen.

Die Schweißeinrichtung 4 bzw. deren Heizeinrichtung 26 kann bspw. so konzipiert sein, dass der Schweißvorgang als Heiß-Gas-Schweißen ausgestaltet ist. In diesem Fall kann das jeweilige Heizelement 27 so ausgelegt sein, dass daraus ein Heißgas 35 austritt, das die Schweißzonen 28 beaufschlagt.

Nach dem Aufheizen der Schweißzonen 28 können die Formkörper 6,7 gemäß Fig. 6 entsprechend Pfeilen 30 aufeinander zu bewegt werden, bis die Schweißzonen 28 aneinander anliegen und insbesondere aneinander angedrückt werden. Jetzt liegt die Schweißstellung des Spritzwerkzeugs 5 vor. Die Schweißzonen 28 der beiden Gehäuseteile 20,21 vereinen sich dadurch zu Schweißnähten 31. Hierbei wird das Gehäuse 19 gefügt, während der Funktionseinsatz 22 bereits im Inneren des Gehäuses 19 angeordnet ist.

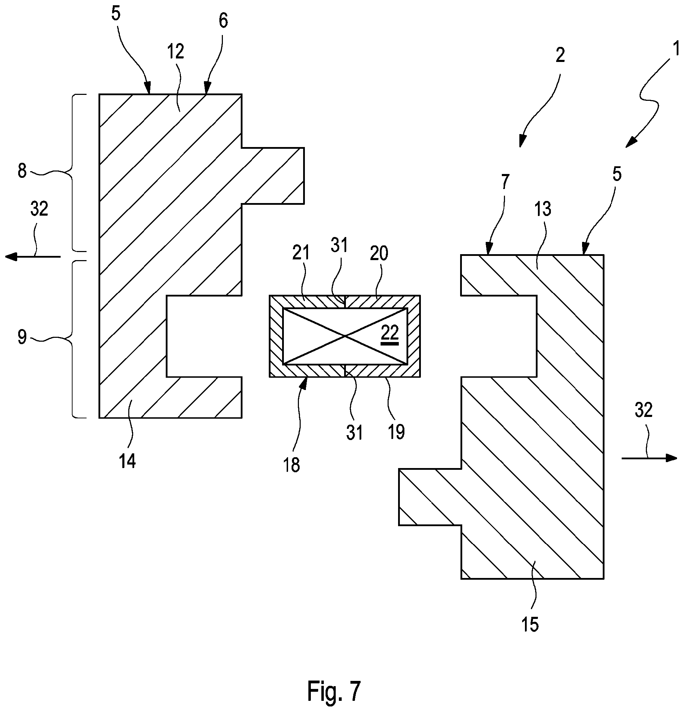

Anschließend erfolgt gemäß Fig. 7 die Entformung des Gehäuses 19 bzw. des Bauteils 18 mit Gehäuse 19 und darin eingeschlossenem Funktionseinsatz 22. Hierzu werden die beiden Formkörper 6,7 und somit die Werkzeugteile 12,13,14,15 entsprechend Pfeilen 32 voneinander entfernt, sodass das Spritzwerkzeug 5 wieder geöffnet ist und das Bauteil 18 aus den äußeren Werkzeugteilen 13,14 entformt bzw. herausgenommen werden kann.

Anschließend werden gemäß Fig. 8 die Formkörper 6,7 und somit die Werkzeugteile 12,13,14,15 entsprechend Pfeilen 33 relativ zueinander so bewegt, bis innerhalb der Werkzeugabschnitte 8,9 das jeweilige innere Werkzeugteil 12 bzw. 15 wieder zum zugehörigen äußeren Gehäuseteil 13 bzw. 14 fluchtend ausgerichtet ist. Anschließend können die so ausgerichteten Formkörper 6,7 und somit die Werkzeugteile 12,13,14,15 entsprechend Fig. 9 gemäß Pfeilen 34 wieder aufeinander zu bewegt werden, um das Spritzwerkzeug 5 zu schließen, also die Spritzstellung einzunehmen und um die Kavitäten 10 und 11 für das Spritzformen neuer Gehäuseteile 20,21 zu bilden.

In den Figuren 3 und 4 nehmen die Formkörper 6,7 und somit die Werkzeugteile 12,13,14,15 eine Einlegestellung ein. In Fig. 5 ist eine Heizstellung gezeigt, die sich bei der hier gezeigten Ausführungsform jedoch nicht von der Einlegestellung unterscheidet. In Fig. 6 ist eine Schweißstellung gezeigt, in der das Fügen des Gehäuses 19 erfolgt. Erkennbar sind die unterschiedlichen Stellungen, also die Spritzstellung, die Einlegestellung bzw. die Heizstellung und die Schweißstellung im selben Spritzwerkzeug 5 realisiert.

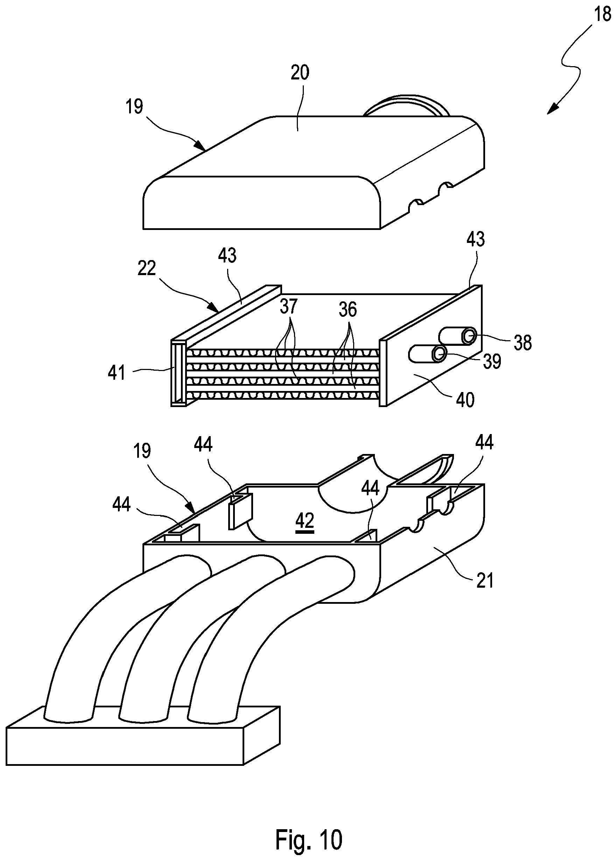

Entsprechend Fig. 10 handelt es sich beim Bauteil 18 vorzugsweise um ein Saugmodul mit einem Ladeluftkühler. Der Funktionseinsatz 22 ist ein Ladeluftkühler mit Kühlkanälen 36, in denen ein Kühlmittel zirkulieren kann und mit von Ladeluft durchströmbaren Lamellen 37, die zwischen den Kühlkanälen 26 angeordnet sind. Ein Zulaufanschluss 38 und ein Rücklaufanschluss 39 sind aus einem Sammelboden 40 herausgeführt. Außerdem sind die Kühlkanäle 36 gegenüber des Sammelbodens 40 über einen Umlenkboden 41 miteinander fluidisch verbunden.

Das Gehäuse 19 weist in seinem Inneren einen Frischluftkanalabschnitt 42 auf, in den der Kühlerblock, also der Funktionseinsatz 22 eingesetzt ist. Die Gehäuseteile 20,21 bilden ein Oberteil und ein Unterteil des Gehäuses 19.

Bei dieser Ausführungsform sind somit beim fertigen Gehäuse 19 zumindest zwei Bestandteile des Funktionseinsatzes 22, nämlich der Vorlaufanschluss 38 und der Rücklaufanschluss 39 aus dem Gehäuse 19 herausgeführt. Gemäß einer zweckmäßigen Ausführungsform können nun die Gehäuseteile 20,21 diese aus dem Gehäuse 19 herausgeführten Bestandteile (Anschlüsse 38,39) beim Verschweißen umschließen und damit verschweißt werden. Auf diese Weise kann gewährleistet werden, dass besagte Bestandteile, also hier die Anschlüsse 38,39 dicht aus dem Gehäuse 19 herausgeführt sind.

Durch entsprechende Geometrien, insbesondere Rippen oder Stege, in dem Gehäuse 19 oder zusätzliche elastische Einlegeteile, insbesondere Dichtungen, kann die Abdichtung zwischen dem Gehäuse 19 und dem Funktionseinsatz 22 verbessert werden. Hierzu können z.B. Dichtungen als Einlegeteile in eine oder beide Gehäuseteile 20, 21 eingelegt werden.

Alternativ kann auch das Funktionsbauteil mit einer entsprechenden Geometrie versehen oder mit einer Dichtung umgeben sein und gemeinsam mit dieser Dichtung in das Gehäuse 19 bzw. eines der Gehäuseteile 20, 21 eingesetzt werden. Bei weiteren Ausgestaltungen kann zusätzlich oder alternativ zu einer Dichtung auch ein weiteres Bauteil vorgesehen sein, welches andere Funktionen wie z.B. akustische und/oder thermische Entkopplungen zwischen dem Funktionsbauteil und dem Gehäuse 19 erfüllt. Derartige zusätzliche Bauteile können z.B. Matten oder Folien aus Materialien mit den gewünschten Eigenschaften sein.

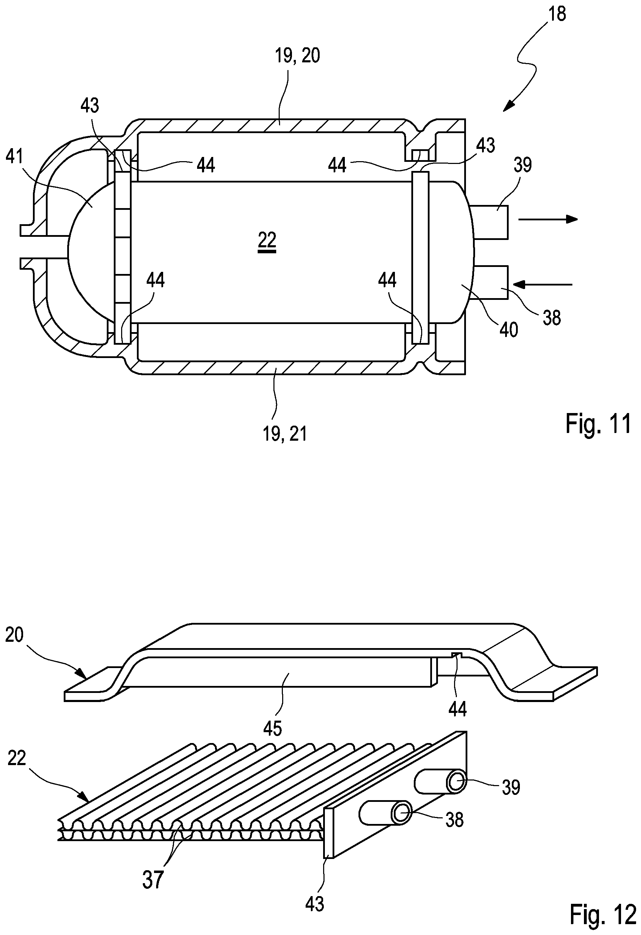

In Figur 11 ist ein Frischluftverteiler mit einem Ladeluftkühler in teilmontiertem Zustand im Schnitt dargestellt. Der Figur 10 entsprechende Teile sind mit gleichen Bezugszeichen versehen. Der Funktionseinsatz 22 verfügt über Kontaktstellen 43, welche mit Aufnahmen 44 an den Gehäuseteilen 20, 21 korrespondieren. Die Kontaktstellen 43 sind linksseitig als segmentiert umlaufend angeordnete Vorsprünge ausgebildet. Rechtsseitig sind die Kontaktstellen 43 als umlaufender Rand ausgebildet. Die Aufnahme 44 ist linksseitig als umlaufende Nut ausgebildet. Rechtsseitig ist die Aufnahme 44 als am Umfang verteilt angeordnete segmentierte Aussparung ausgebildet. Selbstverständlich können die Kontaktstellen 43 und/oder die Aufnahmen 44 auf beiden Seiten gleich ausgestaltet sein oder die jeweils andere Ausführungsform, als die Dargestellte, aufweisen. Bei anderen Ausgestaltungen kann auch nur eine einzige Kontaktstelle 43 vorgesehen sein, welche mit den mindestens zwei Gehäuseteilen 20, 21 korrespondiert. Diese eine Kontaktstelle 43 kann mittig des Funktionseinsatzes 22 oder stirnseitennah angeordnet sein. Durch das Zusammenführen der Gehäuseteile 20, 21 wird die Kontaktstelle 43 in der Aufnahme 44 fixiert. Somit wird ein axiales Verschieben des Funktionseinsatzes 22 in montiertem Zustand verhindert. Weiterhin stellt die Kontaktstelle 43 gemeinsam mit der Aufnahme 44 eine Lagerstelle des Funktionseinsatzes 22 innerhalb des Gehäuses 19 dar. Bei Ausgestaltungen mit einer umlaufend ausgebildeten Kontaktstelle 43 und einer umlaufend ausgebildeten Aufnahme 44 kann in diesem Bereich eine Abdichtung ausgebildet sein.

In Figur 12 ist ein Teilausschnitt eines Frischluftverteilers mit einem Ladeluftkühler vor der Montage dargestellt. Das korrespondierende zweite Gehäuseteil 21 ist nicht dargestellt. Bei dieser Ausgestaltung verfügt das erste Gehäuseteil 20 über eine Rippe 45, welche in Richtung des Funktionseinsatzes 22 auskragend ausgebildet ist. Bei der Montage des Funktionseinsatzes 22 in das Gehäuseteil 20 wird die Rippe 45 in Teilbereiche des Funktionseinsatzes 22 eingedrückt. Die Kontaktstelle 43 greift in die Aufnahme 44 ein, wodurch die axiale Lage des Funktionseinsatzes 22 innerhalb des Gehäuses 19 fixiert ist. Durch die sich in Montagerichtung der Gehäuseteile 20, 21 erstreckende Rippe 45 kann diese derart in den Funktionseinsatz 22 eingreifen, dass lediglich die beim Eintauchen kontaktierten Bereiche deformiert werden. Somit ergibt sich zwischen der Rippe 45 und dem Funktionseinsatz 22 eine Abdichtung, welche einen zu großen Leckagestrom verhindert und die Ladeluft gezwungen ist, durch den Ladeluftkühler 22 hindurch zu strömen.

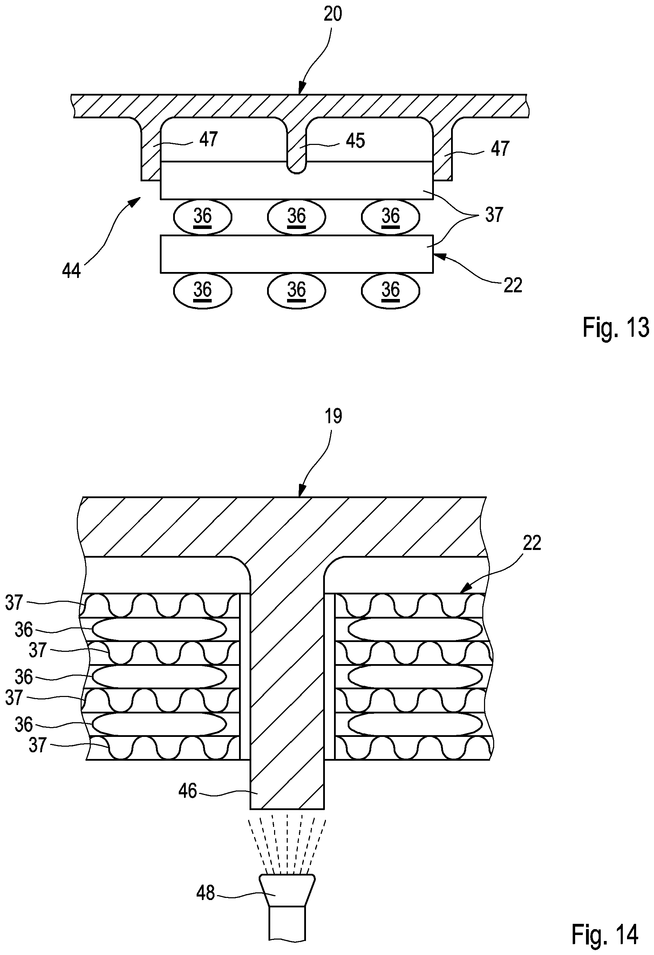

In Figur 13 ist eine Seitenansicht des Frischluftverteilers nach der Montage dargestellt, wobei die Schnittdarstellung eine um 90° versetzte Ansicht bezogen auf Figur 12 zeigt. Bauteile, welche den bereits beschriebenen entsprechen, sind mit gleichen Bezugszeichen versehen. Bei dieser Darstellung ist ersichtlich, dass die Rippe 45 in die Lamellen 37 eingreift und so eine Labyrinthdichtung ausbildet. Weiterhin ist eine Aufnahme 44 dargestellt, welche aus zueinander beabstandeten Stegen 47 gebildet ist. In diese Aufnahme 44 ist der Funktionseinsatz 22 eingesetzt und fixiert. Die Aufnahme 44 ist nur beispielhaft ausgeführt und kann selbstverständlich auch andere Ausgestaltungen, insbesondere gemäß Figur 11 aufweisen.

In Figur 14 ist eine alternative Ausgestaltung der Figur 13 dargestellt. Das Gehäuse 19 verfügt bei dieser Ausgestaltung über einen Zuganker 46, welcher durch das Funktionsbauteil 22 hindurch ragt. Vor dem Zusammenfügen der Gehäuseteile 20, 21 wird der Zuganker 46 über eine Wärmequelle 48 derart erhitzt, dass der untere Bereich des Zugankers 46 sich beim Zusammenfügen der Gehäuseteile 20, 21 mit dem gegenüberliegenden Gehäuseteil 20, 21 stoffschlüssig verbindet. Dies ist insbesondere bei Gehäuseteilen 20, 21 aus Kunststoff eine einfache und kostengünstige Verbindungsart. Als Wärmequelle 48 eignet sich z.B. Heißluft, Laser oder Infrarotstrahlung. Die Verwendung eines stoffschlüssigen Verbundes zwischen Zuganker 46 und gegenüberliegendem Gehäuseteil 20, 21 ist insbesondere zur Vermeidung von Relativbewegungen, wie z.B. ein Aufblähen des Gehäuses, zwischen gegenüberliegenden Flächen geeignet.

Die exemplarisch anhand des Frischluftverteilers und des Ladeluftkühlers erläuterten Merkmale sind selbstverständlich auch auf andere Gehäuse und Funktionsbauteile übertragbar.

## Patentansprüche

1. Verfahren zum Herstellen eines Saugmoduls (18), das ein Gehäuse (19) und wenigstens einen darin angeordneten Ladeluftkühler (22) aufweist,
- bei dem wenigstens zwei Gehäuseteile (20,21) aus Kunststoff spritzgeformt werden,
- bei dem wenigstens ein Ladeluftkühler (22) in wenigstens eines der Gehäuseteile (20,21) eingelegt wird,
- bei dem die Gehäuseteile (20,21) bei darin eingelegtem, wenigstens einem Ladeluftkühler (22) miteinander zum Gehäuse (19) verschweißt werden,
- wobei der Ladeluftkühler (22) über Kontaktstellen zu wenigstens zwei der Gehäuseteile (20, 21) verfügt,
- wobei das Einsetzen des Ladeluftkühlers (22) in das jeweilige Gehäuseteil (20, 21) und das Verschweißen der Gehäuseteile (20, 21) zum Gehäuse (19) bei spritzfrischen Gehäuseteilen (20, 21) erfolgt, so dass die Gehäuseteilte (20, 21) beim Abkühlen auf den Ladeluftkühler (22) aufschrumpfen.

2. Verfahren nach Anspruch 1,
**dadurch gekennzeichnet,**
**dass** die Gehäuseteile (20, 21) wenigstens eine Aufnahme (44; 47) aufweisen, in welcher der Ladeluftkühler (22) zumindest abschnittsweise formschlüssig gehalten ist.

3. Verfahren nach Anspruch 1 oder 2,
**dadurch gekennzeichnet,**
**dass** die Gehäuseteile (20, 21) den Ladeluftkühler (22) unter Vorspannung halten.

4. Verfahren nach einem der Ansprüche 1 bis 3,
**dadurch gekennzeichnet,**
**dass** die wenigstens zwei Gehäuseteile (20,21) jeweils in einem Spritzwerkzeugabschnitt (8,9) spritzgeformt werden, wobei insbesondere vorgesehen sein kann, dass die wenigstens zwei Spritzwerkzeugabschnitte (8,9) im selben Spritzwerkzeug (5) ausgebildet sind.

5. Verfahren nach Anspruch 4,
**dadurch gekennzeichnet,**
**dass** die wenigstens zwei Gehäuseteile (20,21) für den Schweißvorgang jeweils in einem Werkzeugteil (13,14) der mehrteiligen Spritzwerkzeugabschnitte (8,9) verbleiben.

6. Verfahren nach Anspruch 5,
**dadurch gekennzeichnet,**
**dass** die Werkzeugteile (13,14) der wenigstens zwei Spritzwerkzeugabschnitte (8,9) zwischen einer Spritzstellung, in welcher die Gehäuseteile (20,21) spritzgeformt werden, einer Einlegestellung, in welcher der wenigstens eine Ladeluftkühler (22) in das jeweilige Gehäuseteil (20,21) eingesetzt wird, einer Heizstellung, in welcher die Gehäuseteile (20,21) in miteinander zu verschweißenden Schweißzonen (28) erhitzt werden, und einer Schweißstellung verstellbar sind, in welcher die Gehäuseteile (20,21) in den Schweißzonen (28) zum Gehäuse (19) verschweißt werden.

7. Verfahren nach Anspruch 6,
**dadurch gekennzeichnet,**
**dass** dieSpritzstellung, die Einlegestellung, die Heizstellung und die Schweißstellung im selben Spritzwerkzeug (5) realisiert werden.

8. Verfahren nach einem der Ansprüche 1 bis 7,
**dadurch gekennzeichnet,**
**dass** mit wenigstens einem Heizelement (27) miteinander zu verschweißende Schweißzonen (28) der Gehäuseteile (20,21) aufgeheizt werden.

9. Verfahren nach einem der Ansprüche 1 bis 8,
**dadurch gekennzeichnet,**
- **dass** der Schweißvorgang als Heiß-Gas-Schweißen ausgestaltet ist, wobei insbesondere vorgesehen sein kann, dass aus dem jeweiligen Heizelement (27) Heißgas (35) austritt und die Schweißzonen (28) beaufschlagt, oder
- **dass** der Schweißvorgang als NIR-Schweißen ausgestaltet ist, wobei insbesondere vorgesehen sein kann, dass aus dem jeweiligen Heizelement (27) Infrarotstrahlung austritt und die Schweißzonen (28) beaufschlagt.

10. Verfahren nach einem der Ansprüche 1 bis 9,
**dadurch gekennzeichnet,**
**dass** beim Verschweißen der Gehäuseteile (20,21) außerdem wenigstens eines der Gehäuseteile (20,21) zusätzlich mit dem wenigstens einen Ladeluftkühler (22) verschweißt wird.

11. Verfahren nach Anspruch 10,
**dadurch gekennzeichnet,**
**dass** die Gehäuseteile (20,21) beim Verschweißen zumindest einen aus dem Gehäuse (19) herausgeführten Bestandteil (38,39) des Ladeluftkühleres (22) umschließen und damit verschweißt werden, sodass der jeweilige Bestandteil (38,39) dicht aus dem Gehäuse (19) herausgeführt ist.

12. Verfahren nach einem der Ansprüche 1 bis 11,
**dadurch gekennzeichnet,**
**dass** das Gehäuse (19) einen Frischluftkanalabschnitt (42) aufweist, in den der Ladeluftkühler (22) eingesetzt ist.

## Claims

1. A method for producing an intake module (18) that has a housing (19) and at least one intercooler (22) arranged therein,
- wherein at least two housing parts (20, 21) are moulded from plastic,
- wherein at least one intercooler (22) is inserted into at least one of the housing parts (20, 21),
- wherein the housing parts (20, 21), with at least one intercooler (22) inserted therein, are welded together so as to form the housing (19),
- wherein the intercooler (22) has contact points to at least two of the housing parts (20, 21),
**characterized in**
- **that** the housing parts (20, 21) are injection moulded, and
- **that** inserting the intercooler (22) into the respective housing part (20, 21) and welding the housing parts (20, 21) so as to form the housing (19) is carried out with freshly injection moulded housing parts (20, 21) so that the housing parts (20, 21) shrink onto the intercooler (22) during cooling.

2. The method according to claim 1,
**characterized in**
**that** the housing parts (20, 21) have at least one receptacle (44; 47) in which the intercooler (22) is held in a positive-locking manner at least in certain sections.

3. The method according to claim 1 or claim 2,
**characterized in**
**that** the housing parts (20, 21) hold the intercooler (22) under pretension.

4. The method according to any one of the claims 1 to 3,
**characterized in**
**that** the at least two housing parts (20, 21) are injection moulded in each case in one injection moulding tool section (8, 9), wherein it can in particular be provided that the at least two injection moulding tool sections (8, 9) are formed in the same injection moulding tool (5).

5. The method according to claim 4,
**characterized in**
**that** for the welding process, the at least two housing parts (20, 21) remain in each case in a tool part (13, 14) of the multi-piece injection moulding tool sections (8, 9).

6. The method according to claim 5,
**characterized in**
**that** the tool parts (13, 14) of the at least two injection moulding tool sections (8, 9) are displaceable between an injection position in which the housing parts (20, 21) are injection moulded, an insertion position in which the at least one intercooler (22) is inserted into the respective housing part (20, 21), a heating position in which the housing parts (20, 21) are heated in welding zones (28) to be welded together, and a welding position in which the housing parts (20, 21) are welded in the welding zones (28) so as to form the housing (19).

7. The method according to claim 6,
**characterized in**
**that** the injection position, the insertion position, the heating position and the welding position are implemented in the same injection moulding tool (5).

8. The method according to any one of the claims 1 to 7,
**characterized in**
**that** welding zones (28) of the housing parts (20, 21) to be welded together are heated with at least one heating element (27).

9. The method according to any one of the claims 1 to 8,
**characterized in**
- **that** the welding process is configured as hot gas welding, wherein it can in particular be provided that hot gas (35) flows out of the respective heating element (27) and acts on the welding zones (28), or
- **that** the welding process is configured as NIR welding, wherein it can in particular be provided that infrared radiation is emitted out of the respective heating element (27) and acts on the welding zones (28).

10. The method according to any one of the claims 1 to 9,
**characterized in**
**that** when welding the housing parts (20, 21), moreover, at least one of the housing parts (20, 21) is additionally welded together with the at least one intercooler (22).

11. The method according to claim 10,
**characterized in**
**that** during welding, the housing parts (20, 21) enclose at least one component part (38, 39) of the intercooler (22), which component part is fed out of the housing (19), and are welded thereto so that the respective component part (38, 39) is fed out of the housing (19) in a sealed manner.

12. The method according to any one of the claims 1 to 11,
**characterized in**
**that** the housing (19) has a fresh air channel section (42) into which the intercooler (22) is inserted.

## Revendications

1. Procédé servant à fabriquer un module d'aspiration (18), qui présente un boîtier (19) et au moins un refroidisseur d'air de suralimentation (22) disposé dans celui-ci,
- où au moins deux parties de carter (20, 21) sont moulées à partir de matière plastique,
- où au moins un refroidisseur d'air de suralimentation (22) est placé dans au moins une des parties de carter (20, 21),
- où les parties de carter (20, 21) sont assemblées entre elles par soudage, lorsqu'au moins un refroidisseur d'air de suralimentation (22) est placé dans ces dernières, pour former le boîtier (19),
- dans lequel le refroidisseur d'air de suralimentation (22) dispose de points de contact avec au moins deux des parties de carter (20, 21),
- **caractérisé en ce que** les parties de carter (20, 21) sont moulées par injection, et que l'insertion du refroidisseur d'air de suralimentation (22) dans la partie de carter (20, 21) respective et l'assemblage par soudage des parties de carter (20, 21) pour former le boîtier (19) sont effectués en présence de parties de carter (20, 21) venant d'être moulées par injection de sorte que les parties de carter (20, 21) se rétractent lors du refroidissement sur le refroidisseur d'air de suralimentation (22).

2. Procédé selon la revendication 1,
**caractérisé en ce**
**que** les parties de carter (20, 21) présentent au moins un logement (44 ; 47), dans lequel le refroidisseur d'air de suralimentation (22) est maintenu au moins par endroits par complémentarité de forme.

3. Procédé selon la revendication 1 ou 2,
**caractérisé en ce**
**que** les parties de carter (20, 21) maintiennent le refroidisseur d'air de suralimentation (22) sous précontrainte.

4. Procédé selon l'une quelconque des revendications 1 à 3,
**caractérisé en ce**
**que** les au moins deux parties de carter (20, 21) sont moulées par injection respectivement dans une section d'outil d'injection (8, 9), dans lequel en particulier il peut être prévu que les au moins deux sections d'outil d'injection (8, 9) sont réalisées dans le même outil d'injection (5).

5. Procédé selon la revendication 4,
**caractérisé en ce**
**que** les au moins deux parties de carter (20, 21) restent pour l'opération de soudage respectivement dans une partie d'outil (13, 14) des sections d'outil d'injection (8, 9) en plusieurs parties.

6. Procédé selon la revendication 5,
**caractérisé en ce**
**que** les parties d'outil (13, 14) des au moins deux sections d'outil d'injection (8, 9) peuvent être ajustées entre une position d'injection, dans laquelle les parties de carter (20, 21) sont moulées par injection, une position de placement, dans laquelle l'au moins refroidisseur d'air de suralimentation (22) est inséré dans la partie de carter (20, 21) respective, une position de chauffage, dans laquelle les parties de carter (20, 21) sont réchauffées dans des zones de soudage (28) à assembler les unes aux autres par soudage, et une position de soudage, dans laquelle les parties de carter (20, 21) sont assemblées par soudage pour former le boîtier (19) dans les zones de soudage (28).

7. Procédé selon la revendication 6,
**caractérisé en ce**
**que** la position d'injection, la position de placement, la position de chauffage et la position de soudage sont réalisées dans le même outil d'injection (5).

8. Procédé selon l'une quelconque des revendications 1 à 7,
**caractérisé en ce**
**que** des zones de soudage (28) à assembler les unes aux autres par soudage des parties de carter (20, 21) sont réchauffées avec au moins un élément de chauffage (27).

9. Procédé selon l'une quelconque des revendications 1 à 8,
**caractérisé en ce**
- **que** l'opération de soudage est configurée sous la forme d'un soudage au gaz à chaud, dans lequel en particulier il peut être prévu que du gaz chaud (35) sorte de l'élément de chauffage (27) respectif et soumette les zones de soudage (28) à une action, ou
- **que** l'opération de soudage est configurée sous la forme d'un soudage NIR (proche infrarouge), dans lequel en particulier il peut être prévu qu'un rayonnement infrarouge sorte de l'élément de chauffage (27) respectif et soumette les zones de soudage (28) à une action.

10. Procédé selon l'une quelconque des revendications 1 à 9,
**caractérisé en ce**
**que** lors de l'assemblage par soudage des parties de carter (20, 21), par ailleurs au moins une des parties de carter (20, 21) est assemblée par soudage en supplément à l'au moins un refroidisseur d'air de suralimentation (22).

11. Procédé selon la revendication 10,
**caractérisé en ce**
**que** les parties de carter (20, 21) renferment lors de l'assemblage par soudage au moins un élément constitutif (38, 39), guidé hors du boîtier (19), du refroidisseur d'air de suralimentation (22) et sont ainsi assemblées par soudage si bien que l'élément constitutif (38, 39) respectif est guidé de manière étanche hors du boîtier (19).

12. Procédé selon l'une quelconque des revendications 1 à 11,
**caractérisé en ce**
**que** le boîtier (19) présente une section de canal d'air frais (42), dans laquelle le refroidisseur d'air de suralimentation (22) est inséré.
